(19) Europäisches Patentamt

European Patent Office

Office européen des brevets

(11) EP 0 953 399 B1

(12) EUROPEAN PATENT SPECIFICATION

(45) Date of publication and mention
of the grant of the patent:
**19.03.2003 Bulletin 2003/12**

(51) Int Cl.7: **B23K 26/18**, B23K 26/06

(21) Application number: **99200952.2**

(22) Date of filing: **27.08.1997**

(54) **Process for perforating polymer film and polymer film**

Verfahren zur Perforierung eines polymeren Films und polymerer Film

Procédé de perforation d'un film polymère et film polymère

(84) Designated Contracting States:
**AT BE CH DE DK ES FI FR GB GR IE IT LI LU MC NL PT SE**

(30) Priority: **27.08.1996 GB 9617821
09.04.1997 GB 9707203**

(43) Date of publication of application:
**03.11.1999 Bulletin 1999/44**

(62) Document number(s) of the earlier application(s) in
accordance with Art. 76 EPC:
**97937715.7 / 0 925 141**

(73) Proprietor: **British Polythene Limited
Greenock PA15 2RP (GB)**

(72) Inventors:
• **Jones, Robert
Cambridge CB4 3AH (GB)**
• **Hazell, Michael
Cambridge CB4 1JD (GB)**

(74) Representative: **Ede, Eric
Fitzpatricks,
4 West Regent Street
Glasgow G2 1RS (GB)**

(56) References cited:
**EP-A- 0 329 438 DE-A- 4 000 561
GB-A- 1 255 431**

## Description

This invention relates to industrial processes for non-contact perforating ("punching") of polymer films considered as thin or ultra-thin and to the thin polymer films produced there with.

## Background to the Invention

Ideally the apparatus used in an industrial process for perforating materials should be capable of providing a variety of openings of a desired shape without difficulty. In this specification the words "perforation" and "hole" are used to generally indicate the formation of an opening or cut in a material without any intended restriction as to the shape so formed unless otherwise stated.

The perforating of web like materials as part of an industrial process also requires providing openings through the material consistently and efficiently at minimum cost. Frequently the material must be foraminated to a high degree but use of mechanical impact methods may result in distortion or possible weakening of the material due to localised stretching of the material or other damage resulting from contact with the foraminating device. Very thin paper webs or polymer films are difficult to process mechanically. Furthermore with mechanical devices alteration of the selected size of hole usually involves some process down-time and manipulation of the hole-punching devices to change the sizes to be cut, spacing etc.

A typical use of mechanical hole punch systems has been in the cutting of holes in polythene sheet. The general process details relating to the use of such a mechanical impact perforation process are given in the following Table 1.

Table 1

| Specification for on-line Hole Punching | | | | | |
|---|---|---|---|---|---|
| Film Width (m) | Reel Width (m) | Film Thickness ($\mu$m) | No of Layers | Total Thickness $\mu$m | Film Speed (m/min) |
| 1.75 | 1.75 | 35 | 2 | 70 | 40 |
| 2.2 | 2.2 | 35 | 2 | 70 | 40 |
| 10 | 2.5 | 50 | 4 | 200 | 26 |
| 12 | 1.6 | 50 | 8 | 400 | 26 |
| 14 | 1.85 | 50 | 8 | 400 | 26 |
| 16 | 2.1 | 50 | 8 | 400 | 26 |

In such known films the holes are typically 10 mm diameter and arranged at 100 mm centres with a 300 mm gap at each side across the width of the film. The pattern is repeated at 80 mm intervals.

Presently known hole punch systems suffer from a number of limitations in yield and production rate, choice of suitable film materials and thicknesses, and a tendency for the apparatus to "clog" by becoming fouled in the material. Therefore it is highly desirable to improve on such systems and examine other methods such as non-contact methods.

The concept of focussing electromagnetic energy as a particle beam or laser beam for cutting purposes has been explored by others already. These methods have proved successful with paper substrates but the application thereof to polymeric materials, especially relatively thin films (say 70 $\mu$m or less) is particularly challenging. Problems observed in the art include the uncontrollable burning or melting of the plastics material or insufficient penetration of the target surface, which leads to unreliable processing either manifesting itself in irregular hole formation or to non-formation of the intended perforation. A further disadvantage is that simultaneous perforation of multiple layers cannot be achieved when melting occurs because the respective layers may stick together.

The technical literature on industrial applications of lasers indicates the use of lasers for perforating a range of materials (paper, plastics, ceramics etc) wherein the perforations are formed either by thermal melting or ablation of the material. Ablation involves absorption of a resonant wavelength with the quick and effective breaking of chemical bonds in the material and subsequent rapid vaporisation of the material, and provides a clean imprint on the material. Unfortunately since it relies on resonance at particular wavelengths it is a method which has hitherto been of limited industrial value being restricted to those materials exhibiting appropriate absorbance characteristics.

Ablation processes are in general initiated by optical energy at wavelengths in the range 0.2 to 10 $\mu$m and the commonly employed lasers are Neodymium:Yttrium aluminium garnet (Nd:YAG -wavelength - 1 $\mu$m) and Carbon Dioxide ($CO_2$-wavelength ~9 to ~11 $\mu$m). The wavelength for ablation of a particular material is dependent upon the material type and composition. *Kapton* for example ablates efficiently at 0.28 $\mu$m which coincides with an emission wavelength of an U.V. Excimer laser.

The use of laser based perforating and cutting equipment in industrial based process operations is known and has found application in the perforation of high density polyethylene irrigation pipe, and integrated-circuit board cutting ("$CO_2$ Lasers in Plastics Production", D Werth, Lasers & Applications, June 1985). Laser use on polymeric materials is discussed by S E Nielsen in an article "Laser Material Processing of Polymers, in Polymer Testing 3, (1983) 303-310, wherein perforation of a polyurethane vein prosthetic device using a pulsed laser is described.

The use of lasers on thin substrates such as sheets or webs has been explored in the paper industry and is illustrated in the following documents.

In so far as work conducted upon polymer films is concerned **EP-A-0 155 035** describes the perforation of a polyolefin film bag for air-venting purposes by use of a laser to form the minimum perforation obtainable i.e. not more than about 150 μm, preferably 70-90 μm. These sizes are too small for the present purposes. Particularly such a proposal is totally unsuited for the purposes of producing perforated polyethylene films as obtainable by the mechanical hole punch process referred to in Table 1 above.

A method of forming larger holes and / or slots is described in **WO-A-96/19 313** possibly utilising a $CO_2$ laser in view of its efficiency in converting radiant energy to heat in the material to be perforated. This involves additionally directing a gas which may be oxygen enriched to burn the required holes. Such a proposal does not provide ablation and cannot be adopted to give good hole quality through multiple layers.

DE 40 00 561 A1 (closest state of the art) describes addition of a particular dopant (diphenyltriazine) to polymethylmethacrylate in the examples, whereby flat-bottomed holes can be produced in a work-piece, and also refers to earlier published work using tinuvin 328 (a 2-(2'hydroxyphenyl) benzotriazole) as a dopant in polymethylmethacrylate, and suggests that two other organic substances DADA and TPBD deliver CO and $CO_2$ under photolysis. There is also speculation that other gas-producing substances could be used.

GB 1 255 431 describes coating of work-pieces with an organic agent prior to contact with a laser beam used to form holes in the work-piece. The organic agent is intended to form a barrier against fusion of ejected material with the edges of the hole being formed in the work-piece, thereby enabling removal of the ejected material thereafter.

An object of the present invention is to provide improvements in or relating to perforation of substrates on a commercial scale. A further object is to provide an improved means for forming relatively large holes in thin web or sheet form substrates, particularly plastics film substrates.

Thus an aim of the present invention is concerned with providing for the perforating of web-like substrates, in polymeric materials such as polyethylenes by an ablation technique using energy from a focussed or coherent electromagnetic radiation source. A further objective of the invention is to provide a method of applying energy emitted by a laser source device successfully in an industrial process for non-contact perforation of web substrates.

EP-A-0 925 141 describes an apparatus for the non-impact formation of one or more perforations in a web of substrate material, which apparatus includes:

means to transport and convey the web of substrate material through the apparatus;
a concentrated or focussed electromagnetic energy device for generating a coherent beam capable of ablating a substrate material, preferably a laser source device having a transmission wavelength which falls within an absorption band of a transmission spectrum of the substrate material; and
means for directing the beam to the web of substrate material whereby the beam is selectively and sequentially directed towards target perforation sites upon the substrate in succession, e.g. by periodically interposing a device for reflecting or deflecting the path of the beam to direct the beam to effect ablation and perforating of the web.

Preferably the beam directing means comprises an array of reflective surfaces arranged on a support which in use is movable to bring each reflective surface successively through the path of the laser beam in a repeatable manner and thereby automatically switch the beam from one target site to the next according to a predetermined programme of operation. The switching is put into effect by the controlled location of the array of reflective surfaces and simultaneous controlled advancement of the web of substrate material under the beam directing means.

The laser may be run from a static operational position adjacent the web transport system, essentially under continuous operation during a production run, with all the necessary switching of the beam being achieved by the beam delivery mechanism wherein a reflecting surface or surfaces acts to redirect the beam of ablating radiation against the web of substrate material precisely where and when it is required and so effectively provide a means of turning the radiation on and off with regard to a target point on the substrate. By suitable control of the web advancement in conjunction with the beam delivery mechanism multiple passes over the same target site is possible. Such an arrangement can be controlled by a local microprocessor or by a larger computer in control of the overall production run.

Whereas it is desirable to operate with the minimum number of energy source devices, it should not be assumed that the invention described here is limited to use of a single source device. Circumstances may prevail where more than one source offers a process advantage. However generally the process and apparatus described herein makes it unnecessary to rely on a plurality of such source devices to perforate a web of substrate material.

In one embodiment described in EP-A-0 925 141 the means for applying or re-directing the ablating radiation comprises a body rotatable about an axis parallel to the direction of the radiation emitted from the laser which body is provided with a number of reflecting surfaces which as the body rotates selectively and sequentially direct the laser radiation onto the web of substrate material. This represents a system of few moving parts, which is not technically complex and so not demanding upon maintenance and should offer long hours of reliable service.

In such an illustrative embodiment the rotatable body comprises a drum the rotation of the which causes reflective devices to intercept the beam from the source device and re-direct it to the web of substrate material sequentially and in a repeatable predetermined pattern. Preferably the drum is rotated by a motor, the operation of which is controllable by a computer or microprocessor to enable it to be synchronised with the web transport system.

In the operation and use of the apparatus consideration must be given to a number of factors. These factors include the nature of the actual substrate material involved, the thickness of the substrate material (single or multi-layer), the size of the perforation required, and the density of the perforations required. Clearly also the operational characteristics of the laser itself have a bearing on the operation of the apparatus and in particular the speed at which the web of substrate material can be processed using the apparatus.

## Summary of the Invention

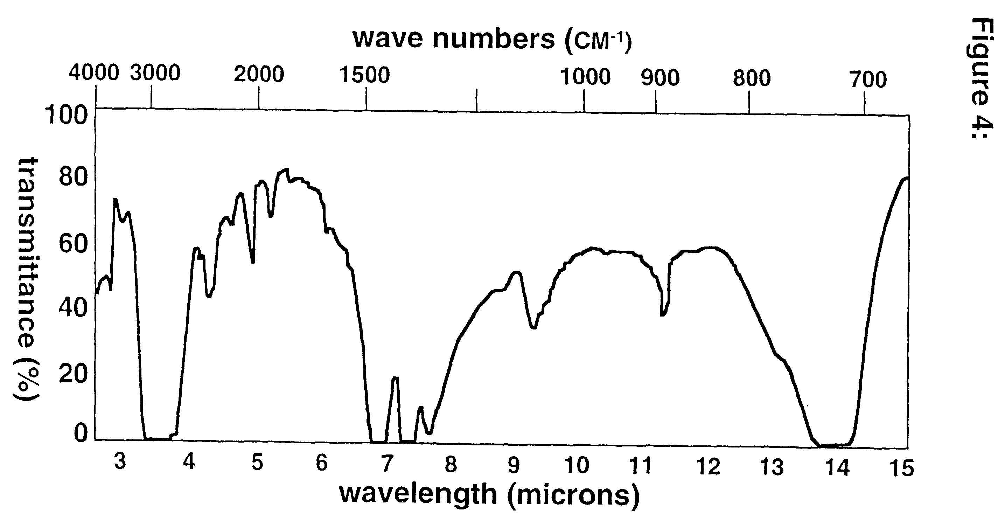

Considering the nature of the substrate material, it may inherently have an appropriate absorption band coincident with the emission wavelength of the selected irradiation source. Thus where the source is a carbon dioxide ($CO_2$) laser which is a laser suitable for industrial use, the polymer film may be a polyimide, a Phillips type hot pressed film polythene (see Figure 4), a Corlona 800 Shell polythene, or another commercially available polythene rich in pendent methylene or other group imparting appropriate absorbance characteristics to the material. If the chosen substrate material does not have an appropriate absorption band matching the preferred laser source device or any others which may be available, then in accordance with an inventive aspect of this invention consideration should be given to modifying the chosen substrate material to make it acquire the desired absorption characteristics. This aspect can also be applied to achieve perforation of paper substrates in a similar way to the processing of polymer films as particularly described herein.

This can be achieved according to the invention as defined in claim 1 and 2 by introducing dopants to the substrate material during its manufacture. Suitable dopants include inorganic materials such as opacifiers, fillers and pigments e.g. polysiloxanes, silicates and titania, and substrate compatible organic materials including appropriately absorbing polymer additives such as typical polyethylene compatible comonomers e.g. vinyl acetate, ethyl acrylate, methyl acrylate, butyl acrylate, a vinyl ester, or an ester of acrylic acid or methacrylic acid, and mixtures thereof, to obtain a doping effect by forming a copolymer with the base polymer. Such a copolymer includes in its matrix additional functionalities capable of absorbing at the desired wavelengths when irradiated. Naturally care must be taken when selecting the dopant to predict or test its effect on the technical properties of the substrate material in case of any detrimental effect. Thus for example, a polythene film may be adversely affected by inclusion of excessive amounts of ethylene-vinyl acetate (EVA) co-polymer which would have a significant effect as regards physical properties of the film. Therefore the appropriate dopant/additive material to be selected and the amount of dopant/additive material employed are dependent upon a number of factors such as:

(i) the wavelength required;
(ii) the required mechanical strength of the polymer film; and
(iii) provision of an ablation rate adequate for a practical production environment.

The dopants may comprise up to 20%, say from 1-10% of the film, by weight. In the case of an inorganic e. g. silicate material dopant, the dopant may comprise less than 9% of the final film, by weight, and preferably 4 to 5%.

A significant advantage of this invention is that it enables relatively large holes, greater than 1 mm (0.001 metres) to be formed in thin polymer foils, for example thin films of polyethylenes of say 70 $\mu$m, or less, up to about 400 $\mu$m thick. The invention is also usefully employed in perforating multiple layers simultaneously, which by ablation permits fast perforation cleanly through the layers which remain separable. The invention also provides the capability of trepanning very large holes accurately by adopting a sequential close perforation process.

In order for the substrate material to be effectively ablated the wavelength of the radiation emitted by the laser must be suitable for the substrate material i.e. of the correct order, otherwise the substrate material will not ablate but will melt and burn. Therefore, the laser is selected or if possible tuned to emit a wavelength which coincides with or is substantially the same as the absorption wavelength of the substrate material being ablated. However since selecting and installing a laser source device is a major capital investment in any production line, it is preferred to consider preliminary modification of the substrate material.

Therefore if the absorption wavelength of the substrate material is not in the correct region with regard to the available laser source device, it is preferred that the absorption wavelength of the substrate material is adjusted during initial manufacture thereof, e.g. during a preliminary melt processing step prior to film forming, or during a paper web forming step, by the addition of suitable dopant or additive materials such as pigments or co-monomer identified as providing the appropriate absorption characteristics as mentioned above.

A wide choice of laser source devices is available and it is considered that the invention can be worked with any laser capable of delivering radiation of the correct wavelength and of sufficient power density to effect ablation rather than melting of the substrate material. Preferred lasers are the high powered readily available monochromatic lasers such as excimer lasers and carbon dioxide lasers.

## Brief Description of the Drawings

Embodiments of the present invention will be now be described, by way of example only, with reference to the accompanying drawings, in which :

Fig 1      shows a schematic block diagram illustrating a generalised process of the invention for perforating a material using a laser;

Fig 2      shows an optical absorption spectrum through a known 50 μm polythene film sample;

Fig 3      is a graph representing rate of ablation of polythene sheet by etch rate versus fluence for the sample of Fig 2 using a 193 μm excimer laser at etch rates of 35 μm and 50 μm;

Fig 4      shows the optical absorption spectrum of a Phillips type hot pressed polythene;

Fig 5      shows the optical absorption spectrum of a Carlona 800 Shell polythene;

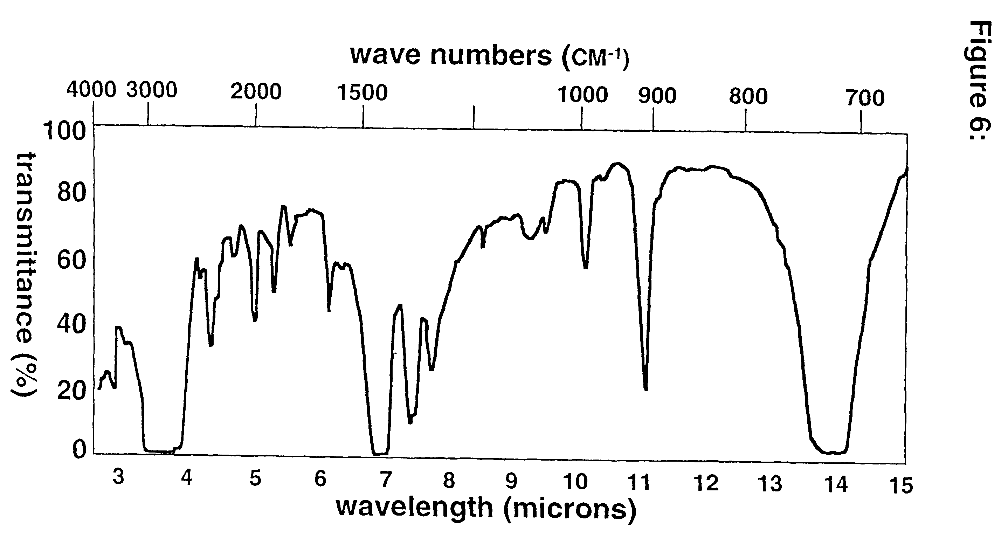

Fig 6      shows the optical absorption spectrum of a generic polythene rich in pendent methylene groups;

Fig 7      shows a schematic diagram of a preferred embodiment of an apparatus for forming hole(s) in a polymer film according to the process of the present invention;

Fig 8      is a schematic end view of the apparatus of Fig 7;

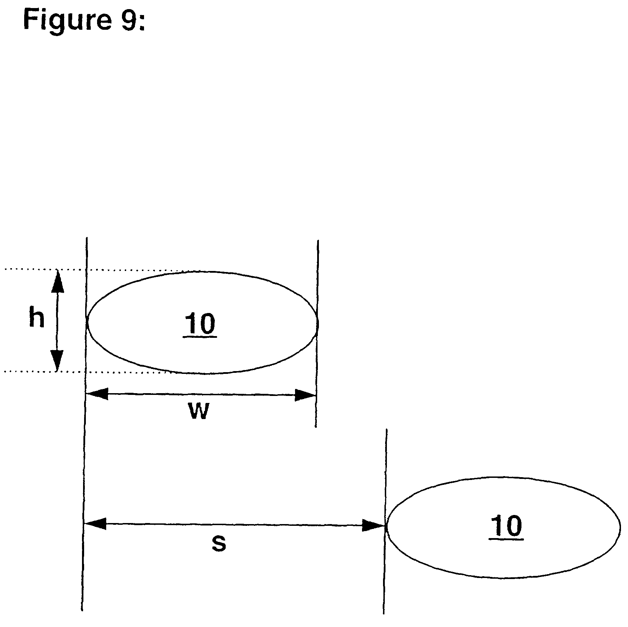

Fig 9      shows schematically the parameters involved in hole formation utilising the invention;

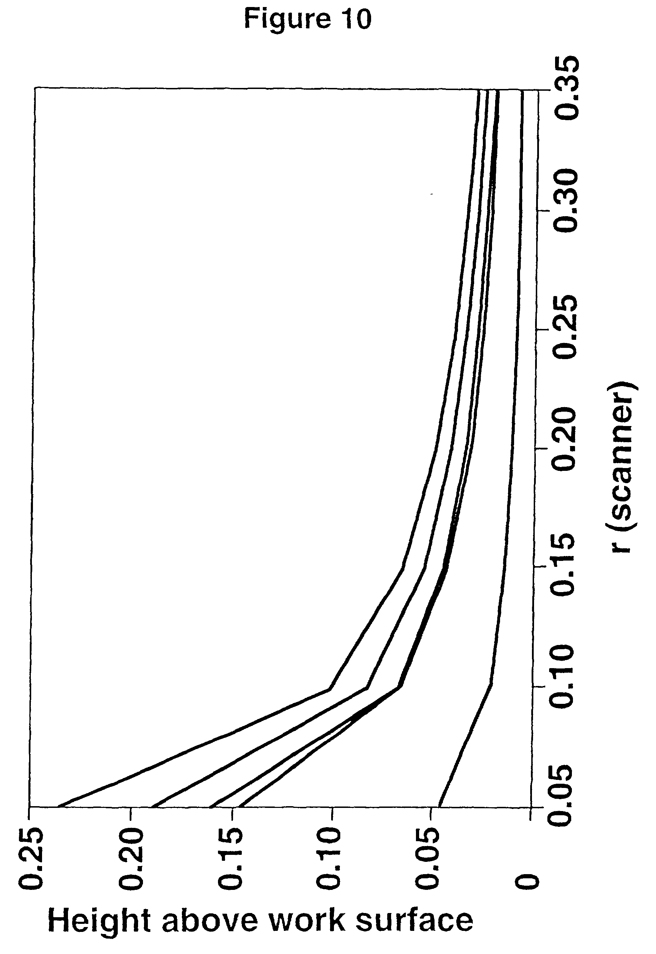

Fig 10     represents by a graph the relationship between height above work surface and drum radius for the apparatus of Fig 7;

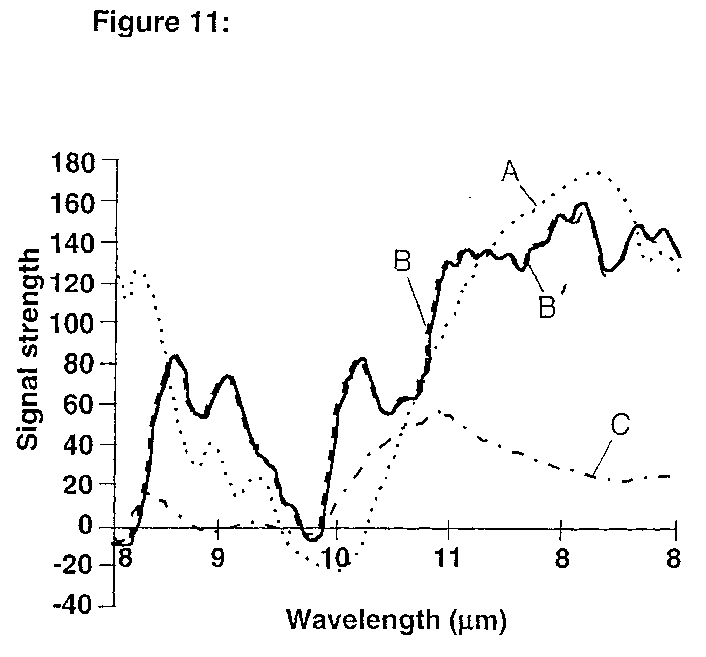

Fig 11     shows optical absorption spectra ($CO_2$ laser) for 3 polythene foil types (A, B, and C) used in this invention;

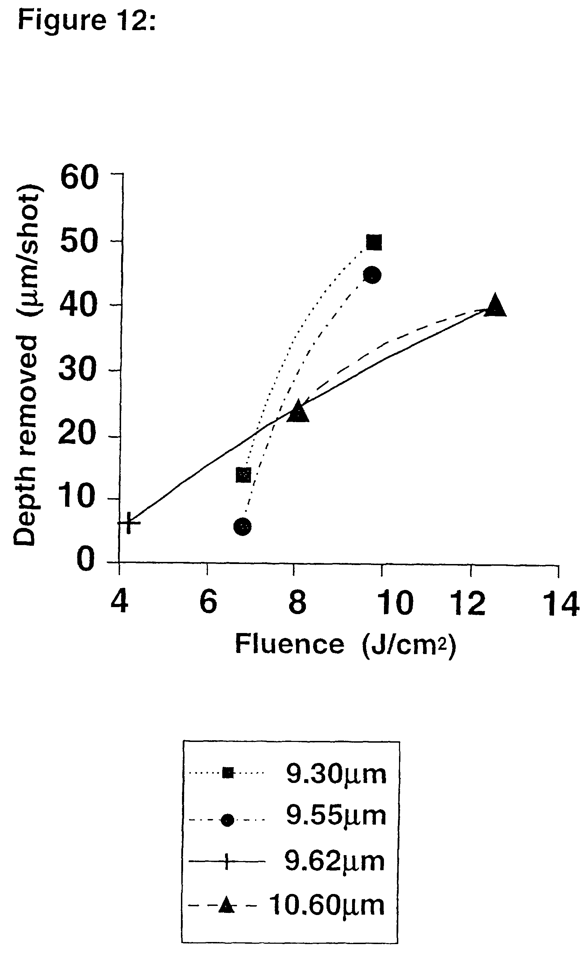

Fig 12     shows the results of ablation of a 50 μm thick inorganic material doped polymer foil type (A) the absorption spectrum of which is shown in Fig. 11;

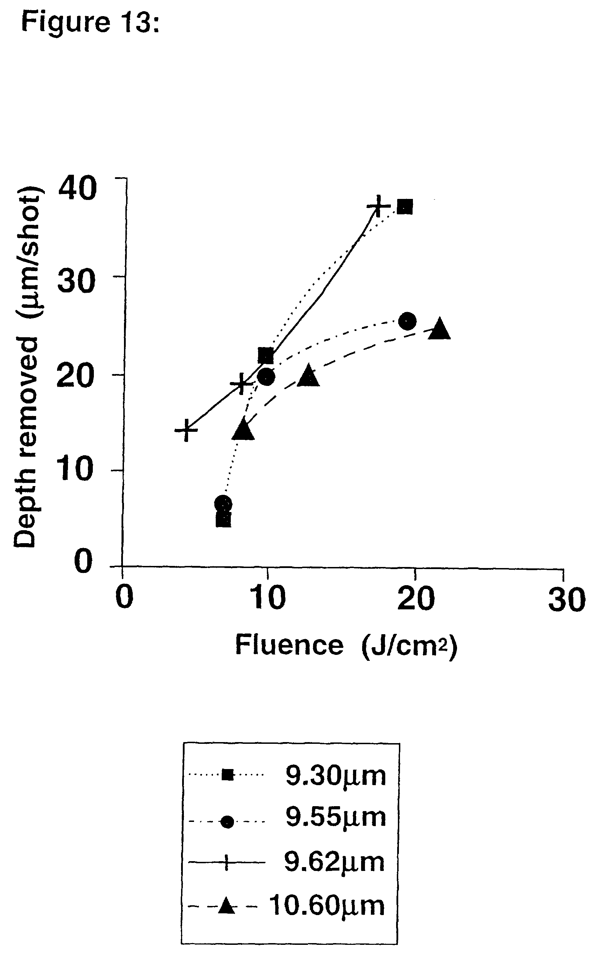

Fig 13     shows the results of ablation of a 150 μm thick foil (C), including both an inorganic dopant and a copolymer dopant in the polymer sample the absorption spectrum of which is shown in Fig. 11; and

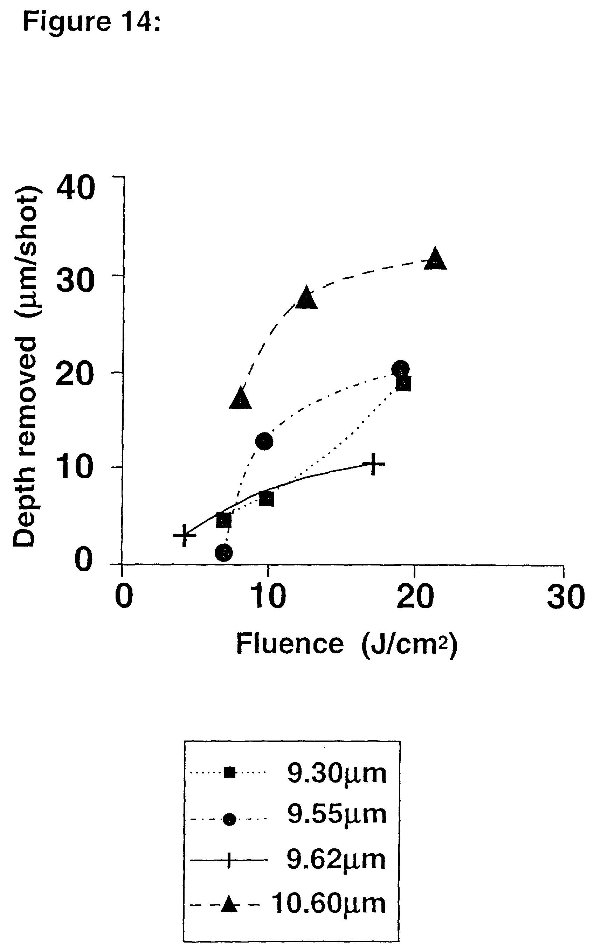

Fig 14     shows the results of ablation of a doped 200 μm thick foil of type (B) the absorption spectrum of which is shown in Fig. 11

## Example

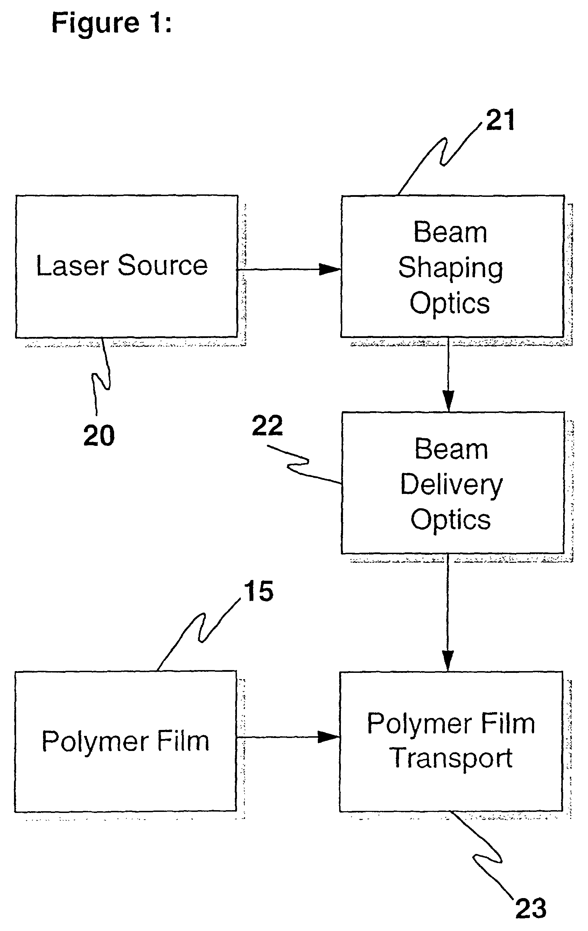

Referring to Fig. 1 of the drawings there is shown by way of block diagrams a general layout of a method of perforating a web of substrate material. In this example the method is applied to a web of substrate material which is a polymer film **15**, here, a sheet of polythene.

With this general method as shown the polymer film 15 is transported through a perforation operation zone by, for example, a conventional sheet or film transport conveyor system **23**. At a point in the operation zone a laser perforating apparatus **20** is set up with respect to the polymer film 15 being transported. This apparatus includes beam shaping optics **21**, to ensure that the laser beam is coherent and well defined, and beam delivery optics **22** to relay the beam accurately and precisely to the surface of the polymer film 15.

In the illustrated embodiment it will be evident that the beam delivery system is based on the technique known as *beam time multiplexing* by virtue of the fact that the beam is sequentially switched to illuminate different target sites on the film 15. The alternative technique of beam *division multiplexing* has the disadvantage of reducing the energy of the beam by division. Therefore greater care would have to be taken with that technique to ensure that the desired ablation is achieved. The inventive concept of targetting a specific absorption band can still be relied upon provided the divided beam can still effect ablation. Where the energy density delivered to a target site is not adequate to achieve ablation the bulk material absorbs the energy will only melt and hole formation becomes erratic.

Of course the disadvantage of beam energy reduction by division can be overcome by moving the laser device and associated optics relative to the target film surface or by providing multiple laser sources corresponding to the number of holes required in the film. However such alternatives represent additional cost and complexity factors which suggest that these options are not likely to be favoured in an industrial foil production line.

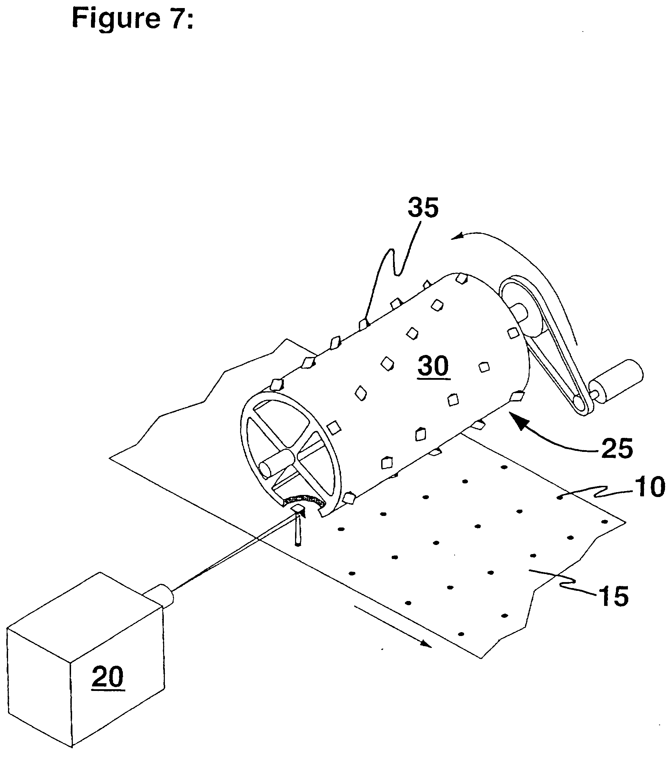

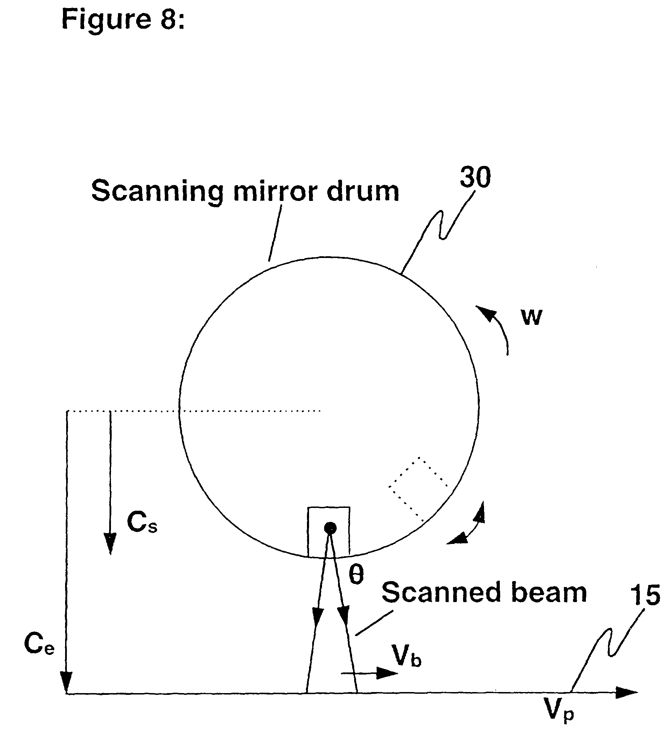

Now turning to Figs. 7 and 8 of the drawings the illustrated embodiment of a laser perforating apparatus of this invention will now be described in more detail.

The apparatus includes a laser 20 with beam shaping optics, beam delivery optics mechanism (non-contact perforating means) 25, and film transport means (not shown) for transporting the polymer film 15 through the processing equipment in the direction shown by the arrow past the laser and under the beam delivery mechanism 25. In the particular arrangement shown the laser perforating apparatus 25 is positioned so that the laser beam emitted from the laser 10 is transverse disposed to the direction of transport of the polymer film 15.

The laser 20 used in the illustrated arrangement is selected with regard to the polymer film or films to be processed and, in particular, the materials to be or likely to be processed using the equipment. This is primarily due to the fact that in the treatment of polymeric films in particular ablation of the material by laser irradiation is preferable so as to provide clean and well defined perforations as explained hereinbefore to avoid melting and burning of the material.

In order to ensure that the material of the film 15 is ablated the wavelength of the light emitted by the laser should be at the absorption wavelength of the polymeric material. Since industrial lasers generally have a certain wavelength of emission, it may be necessary to adjust the wavelength of absorption of the material of the polymer film to ensure ablation as discussed hereinbefore.

In this example the apparatus uses a $CO_2$ laser with high output powers in the wavelength range 9 $\mu$m to 11 $\mu$m.

The laser 20 provides the energy required for perforating the polymer film 15 and this is in the form of a focussed, i.e. a well defined sharp, beam of coherent radiation. Those experienced in the field of lasers will understand the principles of beam shaping and alignment. Briefly, once the beam is emitted from the laser it passes through beam shaping optics 21 (Fig. 1). The geometry of the beam is modified by the beam shaping optics 21 so that the fluence (energy per unit area) in the plane of the film 15 is maximised and limited to the dimensions of the perforation.

The beam delivery mechanism uses optical devices, here mirrors **35**, to re-direct and position the beam leaving the beam shaping optics for correct ablation of the surface of the film 15 to obtain perforation. In practice it is usually necessary to form a multiplicity of perforations at high speeds of manufacturing operation. In this embodiment multiple perforations are rapidly and successively ablated by *beam time multiplexing.* Consequently at any one moment in time there is only one beam acting on the substrate but the speed of operation is such that this would not be obvious to an observer.

In this particular embodiment of the apparatus the beam delivery optics 25 comprises a drum **30** rotatable about an axis substantially parallel to the direction of the laser radiation but not coaxial therewith. The drum has an outer surface onto which is affixed a number of mirrors 35. The drum 30 is arranged transversely to the direction of travel of a web substrate to be perforated and extends over the full width thereof.

The drum 30 is turned about its axis of rotational symmetry by a belt drive means here illustrated but unnumbered where power from a motor which may be an electric motor is transferred through a belt to a speed reduction drive-wheel attached to the drum 30.

In operation, the perforation process requires the polymer film 15 to be being transported into an appropriate target zone, and the drum 30 to be rotated by the motor whilst the $CO_2$ laser 20 emits a beam of radiation which passes through the beam shaping means 21 before impinging against one of the mirrors 35 on the drum 30 and to be deflected downwards onto the polymer film 15 where it ablates the material of the film 15 and forms a perforation.

In determining the controlling factors for the operation of laser perforating apparatus the following general points were considered:

The invention relies on use of ablation as opposed to melting and this can only occur where the irradiated target material is capable of a strong molecular absorption resonant with the incident wavelength. Thus the laser choice is limited by the material's natural molecular absorption bands. Furthermore ablation rate depends on energy density. In order to break bonds and eject material from the body of the polymer a threshold energy must be available thus requiring a critical energy density. As the energy density is increased more material can be volatilised. However eventually the rate saturates.

Saturation of the ablation rate, whereby an increase in input laser energy density does not increase the depth of material ablated occurs around the 1/e absorption depth, ie. when the thickness of material is sufficient to absorb approximately 37% of the incident signal. In general a polythene or similar plastic can be ablated by a typical excimer laser at the rate of 0.5 -1 $\mu$m with a saturation energy density of order 5 J/cm$^2$.

The rate at which material is ablated is determined, for a given energy density by the absorption of the material at the laser wavelength. A stronger absorption results in resonant absorption by a chemical bond which then breaks by ablation in preference to melting and hence more material is removed in a single shot. If the band is weak much of the pulse energy is converted to thermal energy and therefore wasted. Tests performed on polymer materials have shown that a 1/e absorption length of 1-2 $\mu$m results in saturated ablation at a rate of $\sim$2 $\mu$m/shot from a typical excimer laser used for ablation of polymer having an emission wavelength: 193 nm; an energy per pulse: 4 mJ; and a duty cycle: 5 Hz, 20 ns pulse.

Furthermore the energy density must reach a critical level over the whole of the shape to be ablated if a hole is to be generated in a single pass. Thus the energy emitted from the laser must be increased as the square of the diameter of a hole to be formed. The energies available from a typical excimer laser as specified in the preceding paragraph are suitable for holes around 200 µm in diameter but for larger holes the beam must be scanned. Also an excimer is not suitable for trepanning large holes because the energy delivery rate is too low.

Once the ablation rate is saturated an increase in input laser energy density does not increase the depth of material ablated in a single pulse. Thus to increase the rate of material removal the pulse repetition rate must be increased rather than the energy density.

For effective non-contact processing the laser source must match closely the material characteristics and the processing requirements. To identify the most appropriate source to cut large (10 mm) holes in material by ablation experimental work was conducted.

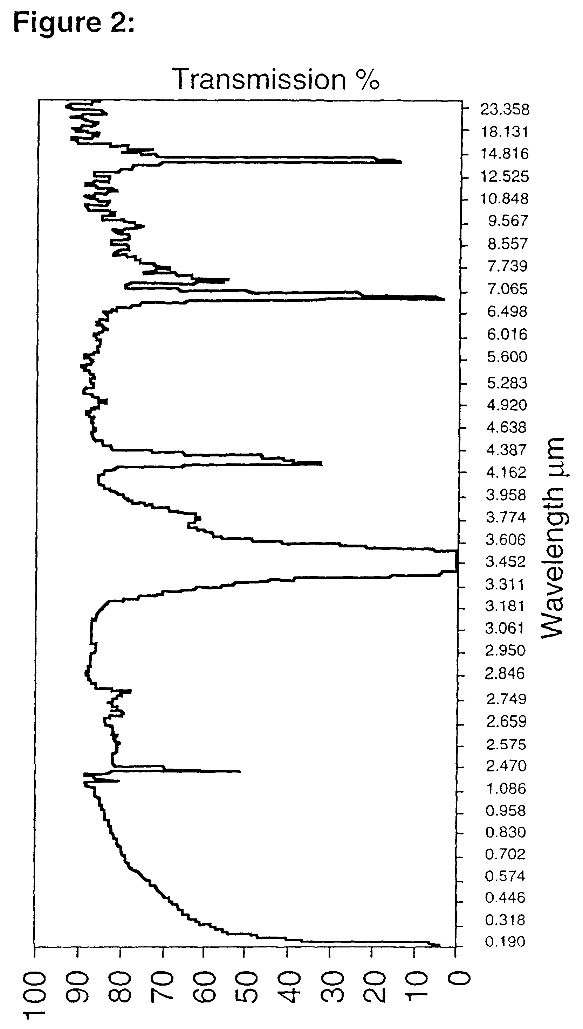

Ablation is the key to forming a high quality hole in the polymer and only occurs if the incident energy input is resonant with a sample absorption. A short list of such wavelengths is obtained from the optical absorption spectrum absorption. Figure 2 shows the optical absorption spectrum of a 50 µm known polythene foil sample (80% LDPE, 20% LLDPE) between 0.190 µm and 25 µm. The spectrum is corrected for background absorption. The bands are listed in Table 2 with lasers having emission near that wavelength.

Table 2

| Optical absorption bands known polythene sample and lasers with resonant emission wavelengths. | | | |
|---|---|---|---|
| Band (µm) | Laser source | Emission wavelength (µm) | Output power |
| 0.190 (edge) | Excimer (ArF) | 0.193 | 4-25mJ, 4-300H |
| 1.68 | NaC1 | 1.45-1.85 | 1.5W |
| 2.31 | Co:MgF$_2$ | 1.75-2.5 | 0.15J, 20Hz |
| 2.35 | Co:MgF$_2$ | 1.75-2.5 | 0.15J, 20Hz |
| 2.38-2.44µm | Co:MgF$_2$ | 1.75-2.5 | 0.15J, 20Hz |
|  | Ti:sapphire | 1.1-2.4 | 20nJ, 82MHz |
|  | Xe-He | 2-4 | 600mW |
| 3.36-3.54 | Lead salt laser diodes | 3.4-3.6 | 3mW |
|  | Xe-He | 2-4 | 500mJ, 1KHz |
| 4.27 |  |  |  |
| 6.77-6.93 |  |  |  |
| 13.61-13.97 |  |  |  |

There is no absorption compatible with either of the two most commonly used lasers, CO$_2$ around 10 µm or Nd:YAG at 1.064 µm. However of those listed the excimer laser is most widely used for material processing.

The absorption spectrum of Fig. 2 shows that the sample has an absorption of around 90% (10% transmission) through 50 µm at the excimer wavelength, 193 nm. This corresponds to an absorption length of 20 µm.

The absorption of polymers is increasingly strong at shorter wavelengths so the absorption length correspondingly decreases. However, as the reliability of excimer lasers operating at shorter wavelengths than 193 nm is presently poor they are not considered suitable for industrial applications.

It has been found that the ablation rate depends on energy density of the incident laser beam at the absorption band. To confirm the importance of the laser operating wavelength polymer samples were exposed to energy densities of between 1 and 10 J/cm$^2$ from sources operating outside an absorption band; CO$_2$ laser at 10.6 µm and 9.4 µm and an excimer laser at 251 nm. In each case the polythene sheet melted uncontrollably.

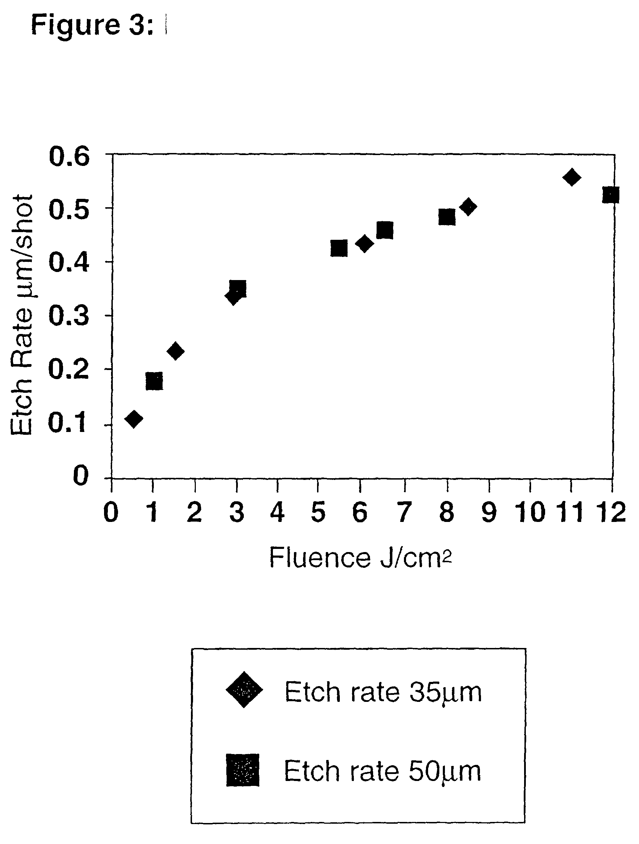

Data in Figure 3 show the depth of the test material ablated per shot from a typical excimer laser as defined above. These results show that an energy density of at least 10 J/cm$^2$ is needed to ablate 0.5 µm depth.

The data confirms that the ablation rate is saturating around 10 J/cm$^2$ so that simply increasing the energy density will not lead to a significant increase in cutting rate. The saturation rate is in line with expectation due to the relatively weak absorption of the band.

Ablation through two layers was tested and was confirmed to be clean, without melting. The two layers did not melt together.

The area of material ablated depends on laser power. An energy density of 10 J/cm$^2$ is required to ablate 0.5 μm of material. However the laser used here was a high power excimer laser suitable for ablation of polymer, as follows: Product: Lambda Physik LPX325i; Nova tube and Halo safe for high reliability and ease of use; In excess of 1.5 billion shots for a single gas fill; Emission wavelength: 193 nm; Energy per pulse: 25 mJ; and Duty cycle: 250 Hz, 20 ns pulse.

This laser emitted only 4 mJ per pulse, resulting in a maximum hole diameter, without scanning, of 225 μm. The maximum energy available from this class of laser is around 25 mJ so the maximum hole diameter per pulse remains very small, around 564 μm. To meet particular requirements a multiple pass scheme is required with the laser operating at extremely high frequencies.

It has been found that the total depth of material ablated depends on laser repetition rate. Irrespective of the area to be ablated a large number of pulses are needed to cut through the polythene sheet given that only 0.5 μm is ablated per pulse of energy density 10 J/cm$^2$.

As specified in Table 1 above the total film thickness normally varies between 70 μm and 400 μm; thus between 140 and 800 pulses would be needed to ablate a 225 μm diameter hole. Further the film may travel at either 40 m/min or 26 m/min with a pattern repeat every 80 mm. Thus 225 μm (corresponding to unit ablation diameter) is traversed in 0.3 ms and 0.5 ms respectively. Ablation should, therefore, occur at faster than 467 kHz or 1.6 MHz respectively to form only a 225 μm hole.

Therefore, whilst perforation of polythene by ablation offers great potential no laser source devices are presently available having a transmission wavelength matching the absorption band of currently used polymer films. The proposed solution of this invention is to adopt a polymer which enables a practical laser source to be used. This is most easily achieved by generating an intense absorption band at the wavelength of an industrial grade laser.

A $CO_2$ laser would be preferred as it is a highly reliable cheap source with low maintenance costs and is widely used in industry. A typical system as detailed in Table 3 offers high powers, 1 kW at high repetition rates, 5 kHz, and is highly reliable.

Table 3

| $CO_2$ Laser Specification. | | |
|---|---|---|
| **Laser Beam data** | ROFIN DC 015 | ROFIN DC 020 |
| Wavelength | 10.6μm | 10.6μm |
| Excitation | RF | RF |
| **Output Power** | | |
| Guaranteed | 1500 W | 1500 W |
| Range (typical) | 150 to 1600 | 200 to 2100 |
| Stability | ±2%(long term) | ±2% (long term) |
| **Laser Beam Quality** | <25mm | <25mm |
| **Pulsed Mode** | | |
| | 8 to 5000 Hz | 8 to 5000 Hz |
| | 20 μs to CW | 20 μs to CW |
| **Electrical ratings** | | |
| Voltage | 400 V ±10% 50/60 Hz; 3-phase, PE; | 400 V ±10% 50/60 Hz; 3-phase, PE; |
| Connected load | approx 30 kVA | approx 40 kVA |
| | approx 25 kW | approx 33 kW |
| Effective power (at nominal power) | approx 2.5 kW | approx 2.5 kW |
| Effective poser (and by) | 45 A | 55 A |
| Max. Current | 63 A NH | 80 A NH |
| consumption | | |
| Fuses | | |

The material modifications, likely ablation rates, beam delivery system and resultant cutting speeds are considered below.

An intense absorption band between 9.2 μm and 10.6 μm, the $CO_2$ wavelengths can be generated in one of a number of ways, such as, the non-limitative examples of;

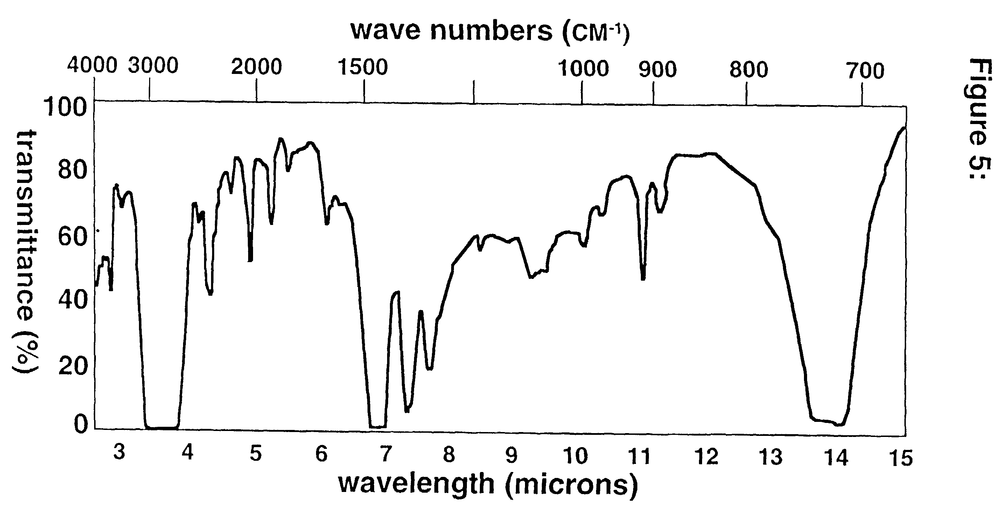

(i) Using an alternative polymer such as polyimide
(ii) Doping current polythene with, for example, a polysiloxane or titania pigment.
(iii) Choosing a polythene fabricated by a different method which exhibits an appropriate absorption. For example Phillips type hot pressed film, Carlona 800 Shell polythenes and generic polythenes rich in pendent methylene groups exhibit some absorption in this region, as shown in Figures 3, 4 and 5 respectively.

Changing the material may have major implications for the production process, recycling, cost and mechanical strength all of which must be assessed when considering the feasibility of changing the material to match the spectral absorption characteristics to a preferred laser source.

An industry standard $CO_2$ laser with operating wavelengths between 9.2-10.6 µm has been used to ablate large holes in polyimide successfully. Typical ablation rates of 10 µm for a saturated energy density of 1 J/cm$^2$ allow deep holes to be formed rapidly. The high output powers facilitate large area ablation.

The expected performance from readily available sources is summarised in Table 4 for the processing conditions specified in Table 1.

Table 4

| Expected Ablation rate and hole diameter achievable. | | | | | | |
|---|---|---|---|---|---|---|
| Rep rate | Power | E/Pulse | Total Thickness | Time to cut hole | Area ablated | Diameter ablated |
| kHz | W | J | (µm) | (ms) | cm$^2$ | (mm) |
| 1 | 200 | 0.2 | 70 | 7 | 0.2 | 5.05 |
| 1 | 200 | 0.2 | 400 | 40 | 0.2 | 5.05 |
| 5 | 1000 | 0.2 | 70 | 1.4 | 0.2 | 5.05 |
| 5 | 1000 | 0.2 | 400 | 8 | 0.2 | 5.05 |

A polyimide ablation rate of 10 µm from 1 J/cm$^2$ pulse yielding a 400 µm deep hole, equivalent to cutting through 8 layers of 50 µm film, can be formed in 8 ms. The diameter of the hole cut in this time with a standard 1000 W laser delivery 200 mJ per pulse is around 5 mm. Lasers operating at several times this power and repetition rate are not uncommon (see Table 3) although more expensive thus higher repetition rates are feasible if required.

The drum scanner design and practical operating conditions are determined from the time needed to cut the holes, the beam geometry, polymer traverse speed and pattern repeat.

**Time:** the optimum time to expose the sheet is given by the time to ablate the sample:

$$t = N/R$$

where R is the laser repetition rate and N, the number of pulses to ablate the working thickness is given by:

$$N = T/T_a$$

where T is the total thickness to be processed and $T_a$ is the thickness ablated per shot.

The optimum time is that for which a given segment of polymer layer is exposed to the laser beam and is given by the time a single mirror is fully illuminated by the incident beam:

$$t = \alpha/\omega$$

where, with reference to Figure 8, $\omega$ is the angular rotation rate and $\alpha$ is the angle travelled round the circumference in that time.

In the case where $t_e$ is the required exposure time $\alpha$ represents the 'useful' part of the mirror, and assuming the angle is small;

$$\alpha = (P-d)/C_s$$

where, P is the width of the mirror at the drum circumference, d is the laser beam diameter and $C_s$ is the radius of the scanner drum.

**Beam geometry:** for this application the laser pulse is required to cut through several layers of the polymer repeated pulses thus, to ensure the shape formed is the same for each layer, the laser spot must be directed to the same point on the polymer surface throughout the exposure. The beam traverse and polymer velocities must therefore be matched. In such as case the exposed area is the circular beam area; $\pi/_4 d^2$

**Traverse speed:** $V_b$ can be related to the drum rotation rate and the height of the mirror above the work surface:

$$V_b = (Cp - C_s)\omega$$

Equating the polymer velocity, $V_p$, and the directed beam velocity $V_b$:

$$V_p = V_b = (Cp - C_s)\omega$$

and the drum rotation rate is:

$$\omega = Vp/(Cp - C_s) = Vp/D$$

The working height of the drum above the travelling surface, D, can be chosen independently where:

$$D = Cp - C_s$$

**Pattern repeat:** the number of perforations needed, n, across the sheet defines the number of mirrors which fit on the circumference of the working drum, thus:

$$2\pi C_s = X\,n\,P$$

where, X is an integer $\geq 1$ indicating that the pattern can be repeated over the drum to give a slower rotation rate.

The pattern repeat time, tr, is given by the distance between repeats, Dr, and the velocity of the polymer, Vp:

$$tr = Dr/Vp$$

For the design to be repeated successfully the pattern repeat time must be greater than the time to generate all the perforations across the sheet:

$$tr \geq n\,t$$

**Drum geometry and operation:** first the feasibility of cutting the perforation in the time allowed must be confirmed for the specified operating conditions.
Combining the required exposure time, the beam diameter and the required number of mirrors and the polymer velocity the work surface, D, can be determined relative to the height above the drum radius, $C_s$;

$$t_e\,\omega = (P-d)/C_s$$

$$\omega = Vp/D$$

$$2\pi C_s = XnP$$

Combining gives

$$D = t_e V/(2\pi/Xn - d/C_s)$$

Given that the drum rotation frequency is related to the height of the mirror above the work surface;

$$f = \omega/2\pi$$

$$\omega = Vp/D$$

Realistic values can therefore be determined for a varying number of pattern repeats on the drum given in time for a pattern repeat, tr = 1/f limits can be placed on the drum rotation frequency in conjunction with those for the operating height above the work surface. Thus the working beam scanner parameters can be determined.

Perforation cutting for all the conditions defined in Table 1 can be met for a given drum radius, $C_s$, and number of mirror sets, X, over the drum by varying the drum rotation frequency, f, and the height above the work surface, D. Realistic operating frequencies and working heights can be achieved with 5 mirror sets on the drum.

| For X = 5 and $C_s$ = 15 cm | | | | | | |
|---|---|---|---|---|---|---|
| Operating conditions | 1 | 2 | 3 | 4 | 5 | 6 |
| f (Hz) | 7.6 | 4.6 | 0.8 | 1.1 | 0.8 | 0.6 |
| D (cm) | 1.4 | 2.3 | 7.8 | 6.3 | 8.3 | 10.9 |

| For X = 5 and $C_S$ = 20 cm | | | | | | |
|---|---|---|---|---|---|---|
| Operating conditions | 1 | 2 | 3 | 4 | 5 | 6 |
| f (Hz) | 8.6 | 5.5 | 0.8 | 1.3 | 1.0 | 0.8 |
| D (cm) | 1.2 | 1.9 | 5.7 | 5.5 | 6.9 | 8.6 |

Increasing the working height is achieved by an increased number of mirror sets, for example:

| For X = 10 and Cs = 20 cm | | | | | | |
|---|---|---|---|---|---|---|
| Operating conditions | 1 | 2 | 3 | 4 | 5 | 6 |
| f (Hz) | 2.8 | 1.3 | 0.1 | 0.4 | 0.2 | 0.1 |
| D (cm) | 3.7 | 8.0 | 6.5 | 18.3 | 28.1 | 46.5 |

Not only is there a cost implication of using a larger number of mirror sets but to meet all operating conditions increasing heights and lower frequencies should be used. This will make the production process less reliable; optical losses through the air will reduce the power at the work surface while a 0.1 Hz rotation frequency may be rather easily perturbed.

**Claims**

1. A process for the production of a non-contact perforated thin polymer film of 70 μm or less up to about 400 μm comprising,

   (a) selecting a laser source device capable of delivering a laser beam having a transmission wavelength which coincides with an absorption band of a transmission spectrum of the film,

   (b) adjusting the absorption characteristics of the polymer prior to forming a film thereof by incorporating therein a dopant providing enhanced absorption at the transmission wavelength of the selected laser source device, said dopant being selected from an inorganic dopant and a co-monomer additive compatible with the polymer film and capable of forming a copolymer therewith,

   (c) providing a moveable array of guide means capable of re-directing the laser beam of the selected laser source device,

   (d) providing transport means to convey a film in a controlled manner through a zone for conducting non-contact perforation upon such a film by ablation of the surface,

   (e) arranging the selected laser source device and said array of guide means in operational proximity to the perforation zone, and

   (f) operating the laser source device and moving the array of guide means to re-direct the laser beam sequentially and selectively to successive target sites on the film to effect ablation and perforating of the film according to a predetermined programme of operation to provide ablated perforations.

2. A thin polymeric film of 70 μm or less up to about 400 μm having perforations ablated therein by a laser source device, wherein the polymeric film is a polyethylene based film comprising a dopant providing enhanced absorption at the transmission wavelength of the selected laser source device, said dopant being selected from an inorganic dopant and a co-monomer additive compatible with olefinic polymers and capable of forming a copolymer therewith.

3. A polymeric film according to claim 2 wherein the inorganic dopant is selected from inorganic opacifiers, fillers and pigments, and is incorporated in the film in an amount of up to 20% by weight.

4. A polymeric film according to claim 3 wherein the dopant is selected from silicates, polysiloxanes and titania.

5. A polymeric film according to claim 3 wherein the dopant is incorporated in the film in an amount of from 1 to 10% by weight.

6. A polymeric film according to claim 2 wherein the co-monomer additive is selected from vinyl acetate, ethyl acrylate, methyl acrylate, butyl acrylate, a vinyl ester, an ester of acrylic acid, an ester of methacrylic acid, and mixtures thereof.

7. A polymeric film according to claim 6 wherein the co-monomer additive is present in the film in an amount of from 1 to 10% by weight.

8. A polymeric film according to any one of claims 2 to 7 wherein the ablated perforations exceed 1 mm in diameter.

**Patentansprüche**

1. Ein Verfahren zur Herstellung eines berührungsfrei perforierten dünnen Polymerfilms von 70 μm oder weniger bis zu etwa 400 μm, umfassend

   (a) Auswählen einer Laserquelleneinrichtung, die in der Lage ist, einen Laserstrahl abzugeben, der eine Übertragungswellenlänge aufweist, welche mit einem Absorptionsband eines Übertragungsspektrums des Films übereinstimmt,
   (b) Anpassen der Absorptionseigenschaften des Polymers vor dem Bilden eines Films daraus durch Einbeziehen eines Dotierungsmittels darin zur Lieferung einer erhöhten Absorption bei der Übertragungswellenlänge der ausgewählten Laserquelleneinrichtungen, wobei das Dotierungsmittel ausgewählt wird aus einem anorganischen Dotierungsmittel und einem co-monomeren Additiv, das mit dem Polymerfilm kompatibel und in der Lage ist, damit ein Copolymer zu bilden,

(c) Liefern einer bewegbaren Anordnung von Führungseinrichtungen, die in der Lage sind, den Laserstrahl der ausgewählten Laserquelleneinrichtung neu auszurichten,

(d) Liefern einer Transporteinrichtung zur Förderung eines Films in einer gesteuerten Weise durch eine Zone zur Durchführung der berührungsfreien Perforation auf diesen Film durch Abtragung von der Oberfläche,

(e) Anordnen der ausgewählten Laserquelleneinrichtung und der Anordnung von Führungseinrichtungen in operativer Nähe zu der Perforationszone, und

(f) Betätigen der Laserquelleneinrichtung und Bewegen der Anordnung von Führungseinrichtungen zur neuen Ausrichtung des Laserstrahls aufeinanderfolgend und selektiv auf aufeinanderfolgende Zielstellen auf dem Film zur Bewirkung der Abtragung und zur Perforierung des Films entsprechend einem vorbestimmten Betriebsprogramm zur Lieferung abgetragener Perforationen.

2. Ein dünner Polymerfilm von 70 µm oder weniger bis zu etwa 400 µm mit darin durch eine Laserquelleneinrichtung abgetragenen Perforationen, wobei der Polymerfilm ein auf Polyäthylen basierender Film ist, umfassend ein Dotierungsmittel zur Lieferung erhöhter Absorption bei der Übertragungswellenlänge der ausgewählten Laserquelleneinrichtung, wobei das Dotierungsmittel ausgewählt ist aus einem anorganischen Dotierungsmittel und einem co-monomeren Additiv, das kompatibel mit olefinischen Polymeren und in der Lage ist, damit ein Copolymer zu bilden.

3. Ein Polymerfilm nach Anspruch 2, wobei das anorganische Dotierungsmittel ausgewählt ist aus anorganischen Trübungsmitteln, Füllmitteln und Pigmenten, und in dem Film in einer Menge von bis zu 20 Gew.% eingeschlossen ist.

4. Ein Polymerfilm nach Anspruch 3, wobei das Dotierungsmittel ausgewählt ist aus Silikaten, Polysiloxanen und Titania.

5. Ein Polymerfilm nach Anspruch 3, wobei das Dotierungsmittel in dem Film in einer Menge von 1 bis 10 Gew.% eingeschlossen ist.

6. Ein Polymerfilm nach Anspruch 2, wobei das Co-Monomer-Additiv ausgewählt ist aus Vinylacetat, Ethylacrylat, Methylacrylat, Butylacrylat, einem Vinylester, einem Ester von acrylischer Säure, einem Ester von methacrylischer Säure, und Mischungen davon.

7. Ein Polymerfilm nach Anspruch 6, wobei das co-monomere Additiv in dem Film in einer Menge von 1 bis 10 Gew.% vorhanden ist.

8. Ein Polymerfilm nach einem der Ansprüche 2 bis 7, wobei die abgetragenen Perforationen 1 mm Durchmesser überschreiten.

**Revendications**

1. Procédé pour la production d'un film polymère mince, de 70 µm ou moins jusqu'à environ 400 µm, perforé sans contact consistant à :

- sélectionner un dispositif de source laser capable de délivrer un faisceau laser ayant une longueur d'onde de transmission qui coïncide avec une bande d'absorption du spectre de transmission du film ;
- ajuster les caractéristiques d'absorption du polymère, avant de former un film avec celui-ci, en incorporant à celui-ci un agent de dopage procurant une absorption améliorée à la longueur d'onde de transmission du dispositif de source laser sélectionné, ledit agent de dopage étant sélectionné à partir d'un agent de dopage inorganique et d'un additif co-monomère compatible avec le film polymère et capable de former un copolymère avec celui-ci ;
- prévoir un ensemble mobile de moyens de guidage capables de rediriger le faisceau laser du dispositif de source laser sélectionné ;
- prévoir des moyens de transport pour convoyer un film de manière contrôlée dans une zone pour effectuer une perforation sans contact sur ce film par ablation de la surface ;

- disposer le dispositif de source laser sélectionné et ledit ensemble de moyens de guidage à proximité opérationnelle de la zone de perforation ; et

actionner le dispositif de source laser et déplacer l'ensemble de moyens de guidage pour rediriger le faisceau laser séquentiellement et sélectivement vers des sites de cibles successives sur le film afin d'effectuer une ablation et une perforation du film selon un programme prédéterminé d'opération pour ménager des perforations par ablation.

2. Film polymère de 70 μm ou moins jusqu'à environ 400 μm, ayant des perforations réalisées dans celui-ci par ablation au moyen d'un dispositif de source laser, dans lequel le film polymère est un film à base de polyéthylène comprenant un agent de dopage procurant une absorption améliorée à la longueur d'onde de transmission du dispositif de source laser sélectionné, ledit agent de dopage étant sélectionné à partir d'un agent de dopage inorganique et d'un additif co-monomère compatible avec des polymères oléfiniques et capable de former un copolymère avec celui-ci.

3. Film polymère selon la revendication 2, dans lequel l'agent de dopage inorganique est sélectionné à partir d'opacifiants, de charges et de pigments inorganiques et est incorporé dans le film dans une proportion allant jusqu'à 20 % en masse.

4. Film polymère selon la revendication 3, dans lequel l'agent de dopage est sélectionné dans le groupe formé de silicates, de polysiloxanes et de dérivés du titane.

5. Film polymère selon la revendication 3, dans lequel l'agent de dopage est incorporé dans le film dans une proportion de 1 à 10 % en masse.

6. Film polymère selon la revendication 2, dans lequel l'additif co-monomère est sélectionné dans le groupe formé d'acétate de vinyle, d'acrylate d'éthyle, d'acrylate de méthyle, d'acrylate de butyle, d'un ester de vinyle, d'un ester d'acide acrylique, d'un ester d'acide méthacrylique et de mélanges de ceux-ci.

7. Film polymère selon la revendication 6, dans lequel l'additif co-monomère est présent dans le film dans une proportion de 1 à 10 % en masse.

8. Film polymère selon une quelconque des revendications 2 à 7, dans lequel les perforations ménagées par ablation dépassent 1 mm de diamètre.

# Figure 1:

```
┌──────────────┐          21
│              │          ╱
│ Laser Source │    ┌──────────┐
│              │──▶ │  Beam    │
└──────────────┘    │ Shaping  │
   ╱                │ Optics   │
  20                └──────────┘
                         │
                         ▼
           22      ┌──────────┐
            ╱      │  Beam    │
                   │ Delivery │
                   │ Optics   │
                   └──────────┘
                         │
        15               ▼
         ╱
   ┌──────────────┐ ┌──────────────┐
   │              │ │              │
   │ Polymer Film │▶│ Polymer Film │
   │              │ │  Transport   │
   └──────────────┘ └──────────────┘
                           ╱
                          23
```

**Figure 2:**

**Figure 3:**

# Figure 4:

# Figure 5:

# Figure 6:

# Figure 7:

## Figure 8:

Scanning mirror drum

30

w

$C_s$

$C_e$

θ

Scanned beam

15

$V_b$

$V_p$

# Figure 9:

# Figure 10

## Figure 11:

## Figure 12:

Legend:
- 9.30μm
- 9.55μm
- 9.62μm
- 10.60μm

Y-axis: Depth removed (μm/shot)
X-axis: Fluence (J/cm²)

# Figure 13:

## Figure 14: